# EUROPÄISCHE PATENTSCHRIFT

(11) **EP 3 892 831 B1**
(45) Veröffentlichungstag und Bekanntmachung des Hinweises auf die Patenterteilung: **23.10.2024**
(21) Anmeldenummer: 21175639.0
(22) Anmeldetag: 30.07.2018
(51) Int. Cl.: F01L 1/18, F01L 13/00, F01L 1/20

(54) **KRAFTÜBERTRAGUNGSVORRICHTUNG FÜR VARIABLEN VENTILTRIEB**
POWER TRANSMISSION DEVICE FOR VARIABLY CONTROLLING VALVE
DISPOSITIF DE TRANSMISSION DE FORCE POUR UN MÉCANISME DE DISTRIBUTION VARIABLE

(30) Priorität: 18.08.2017 DE 102017118852
(43) Veröffentlichungstag der Anmeldung: 13.10.2021
(62) Teilanmeldung aus: 18186225.1
(73) Patentinhaber: MAN Truck & Bus SE, 80995 München (DE)
(72) Erfinder: Bogdanski, Peter, 91126 Schwabach (DE)
(74) Vertreter: v. Bezold & Partner Patentanwälte - PartG mbB

(56) Entgegenhaltungen:
- DE-C2- 4 324 756
- FR-A1- 2 709 149
- JP-U- S57 182 205
- JP-U- S61 105 706
- JP-Y2- H 034 730
- US-A1- 2015 159 521

## Beschreibung

Die Erfindung betrifft eine Kraftübertragungsvorrichtung für einen variablen Ventiltrieb einer Brennkraftmaschine mit einer ersten und zweiten Hebelvorrichtung, insbesondere einem ersten und zweiten Kipphebel. Ferner betrifft die Erfindung einen variablen Ventiltrieb mit der Kraftübertragungsvorrichtung.

Es ist allgemein bekannt, variable Ventiltriebe zum Verändern von Schaltzeiten und Ventilhüben von Gaswechselventilen einer Brennkraftmaschine während des Betriebs der Brennkraftmaschine zu verwenden. Im Stand der Technik ist eine Vielzahl von variablen Ventiltrieben bekannt.

Die DE 10 2006 034 951 A1 betrifft einen Ventiltrieb für eine Brennkraftmaschine, mit einem schaltbaren Kipphebelaufbau mit mehreren Kipphebeln zur Betätigung wenigstens eines Gaswechselventils. Der Ventiltrieb weist eine Umschaltvorrichtung mit Verriegelungsstiften zum Wechseln eines jeweils wirksamen Kipphebels für einen Antrieb des Gaswechselventils mit einem variierenden Ventilhub auf.

Die EP 1 588 027 B1 bezieht sich auf einen Ventilantrieb für Kolben-Brennkraftmaschinen, bei der ein erster Kipphebel mit mindestens einem ersten Zylinderventil in Wirkkontakt steht, zumindest eine Zusatznocke mit einem zweiten Kipphebel in Wirkkontakt steht und der zweite Kipphebel über ein Stellelement mit dem ersten Kipphebel in Kraftfluss bringbar ist.

Die DE 40 25 569 C1 offenbart eine Ventilsteuerung einer als Antrieb oder Bremse schaltbaren Brennkraftmaschine mit von einer Nockenwelle über Steuer-Kipphebel in Antriebs- und Bremsfunktion unterschiedlich gesteuerten Auslassventilen, auf die in Bremsfunktion zusätzlich zu dem in Antriebsfunktion wirksamen Nocken noch ein weiterer Hilfs-Nocken (Brems-Nocken) einwirkt. Jeweils koaxial zu einem Steuer-Kipphebel eines Auslassventils ist ein durch einen Brems-Nocken geführter federnd an diesem anliegender Brems-Kipphebel gelagert, der im Bremsbetrieb an dem Steuer-Kipphebel arretierbar ist.

Die JP S61 105706 U offenbart einen zweiarmigen Kipphebel. Ein Arm des Kipphebels trägt einen hin- und herbewegbaren sowie arretierbaren Nockenfolger.

Die US 2015/159521 A1 offenbart eine Vorrichtung zur Betätigung von mindestens einem Motorventil, welches mit einem Motorzylinder assoziiert ist, die einen Kipphebel aufweist, der konfiguriert ist, um sich hin und her zu bewegen, um das mindestens eine Ventil zu betätigen. Der Kipphebel weist weiter einen Einfahrmechanismus, einen Ausfahrmechanismus, einen ersten Strömungsmitteldurchlass und einen zweiten Strömungsmitteldurchlass auf.

Der Erfindung liegt die Aufgabe zu Grunde, eine alternative oder verbesserte Kraftübertragungsvorrichtung für einen variablen Ventiltrieb zu schaffen. Insbesondere soll eine Kraftübertragungsvorrichtung geschaffen werden, die eine zuverlässige und einfache Veränderung eines Ventilhubs eines Gaswechselventils ermöglicht. Vorzugsweise soll eine Kraftübertragungsvorrichtung bereitgestellt werden, die zwei voneinander unabhängige Ventilhubkurven mindestens eines mit der Kraftübertragungsvorrichtung in Wirkverbindung stehenden Gaswechselventils ermöglicht. Bevorzugt soll dabei eine einfache Ansteuerung möglich sein, die insbesondere keine zylinderselektive Ansteuerung/Umschaltung voraussetzt, sodass mehrere Zylinder gleichzeitig und abhängig voneinander umgeschaltet werden können.

Die Aufgabe wird gelöst durch eine Kraftübertragungsvorrichtung gemäß dem unabhängigen Anspruch. Vorteilhafte Weiterbildungen sind in den abhängigen Ansprüchen und der Beschreibung angegeben.

Die Kraftübertragungsvorrichtung ist für einen variablen Ventiltrieb einer Brennkraftmaschine mit mindestens einem Gaswechselventil und einer Nockenwelle aufweisend einen ersten Nocken und einen zweiten Nocken geeignet. Die Kraftübertragungsvorrichtung weist eine erste Hebelvorrichtung auf, über die eine Wirkverbindung zwischen dem ersten Nocken und dem mindestens einen Gaswechselventil herstellbar ist. Die erste Hebelvorrichtung weist einen den ersten Nocken kontaktierenden ersten Nockenfolger und eine erste Aufnahme für den ersten Nockenfolger auf. Der erste Nockenfolger ist als eine drehbare Rolle ausgeführt und ist in der ersten Aufnahme, insbesondere axial, verschiebbar und arretierbar. Die Kraftübertragungsvorrichtung weist eine zweite Hebelvorrichtung auf, über die eine Wirkverbindung zwischen dem zweiten Nocken und dem mindestens einen Gaswechselventil herstellbar ist. Die zweite Hebelvorrichtung weist einen den zweiten Nocken kontaktierenden zweiten Nockenfolger und eine zweite Aufnahme für den zweiten Nockenfolger auf. Der zweite Nockenfolger ist als eine drehbare Rolle ausgeführt und ist in der zweiten Aufnahme, insbesondere axial, verschiebbar und arretierbar. Die erste Hebelvorrichtung und/oder die zweite Hebelvorrichtung ist als Kipphebel ausgebildet.

Die Kraftübertragungsvorrichtung ermöglicht eine Umschaltung zwischen dem ersten Nocken und dem zweiten Nocken zum Betätigen des mindestens einen Gaswechselventils. Dadurch kann das mindestens eine Gaswechselventil mit zwei vollkommen voneinander unabhängigen Ventilhubsteuerkurven gesteuert werden. Die Integration der Schaltfunktionalität in die erste und zweite Hebelvorrichtung ist zudem bauraumgünstig.

In einem besonders bevorzugten Ausführungsbeispiel ist der erste Nockenfolger zum Kompensieren einer Nockenkontur des ersten Nockens verschiebbar in der ersten Aufnahme gelagert und der erste Nockenfolger ist zum Übertragen der Nockenkontur des ersten Nockens auf das mindestens eine Gaswechselventil in der ersten Aufnahme arretierbar. Alternativ oder zusätzlich ist der zweite Nockenfolger zum Kompensieren einer Nockenkontur des zweiten Nockens verschiebbar in der zweiten Aufnahme gelagert und der zweite Nockenfolger ist zum Übertragen der Nockenkontur des zweiten Nockens auf das mindestens eine Gaswechselventil in der zweiten Aufnahme arretierbar. Wenn beispielsweise eine Verschiebebewegung des ersten Nockenfolger der ersten Aufnahme freigegeben ist, d. h. der erste Nockenfolger nicht arretiert ist, vollführt der ersten Nockenfolger eine Hin- und Herbewegung in der ersten Aufnahme beim Folgen der Nockenkontur des ersten Nockens. Durch die Hin- und Herbewegung des ersten Nockenfolgers wird die Nockenkontur des ersten Nockens kompensiert. Die Nockenkontur des ersten Nockens wird nicht auf das mindestens eine Gaswechselventil übertragen. Wenn beispielsweise zusätzlich der zweite Nockenfolger arretiert ist, ist der zweite Nockenfolger an einer die Nockenkontur des zweiten Nockens kompensierenden Hin- und Herbewegung in der zweiten Aufnahme gehindert. Damit wird die Nockenkontur des zweiten Nockens auf das mindestens eine Gaswechselventil übertragen. In einem Ausführungsbeispiel wird wahlweise der erste Nockenfolger oder der zweite Nockenfolger arretiert. Über den arretieren Nockenfolger kann eine Nockenkontur des entsprechenden Nockens an das mindestens einen Gaswechselventil übertragen werden. Der freigegebene (nicht-arretierte) Nockenfolger kompensiert die Nockenkontur des entsprechenden Nockens durch eine Verschiebung in der Aufnahme. Damit wird das mindestens eine Gaswechselventil entweder durch die Nockenkontur des ersten Nockens oder des zweiten Nockens betätigt.

In einem weiteren Ausführungsbeispiel ist der erste Nockenfolger und/oder der zweite Nockenfolger hydraulisch arretierbar. Beispielsweise kann durch Zuführen eines Steuerfluids ein Nockenfolger freigegeben oder arretiert werden.

Vorzugsweise können über eine beispielsweise zentrale Steuerfluidversorgung eine Mehrzahl von Kraftübertragungsvorrichtungen mit Steuerfluid zum Arretieren und Freigeben der Nockenfolger der Kraftübertragungsvorrichtungen versorgt werden. Dies bietet die Möglichkeit, eine vereinfachte Steuerung der mehreren Kraftübertragungsvorrichtungen zu implementieren, da nicht zylinderselektiv geschaltet werden muss. Stattdessen können mehrere Kraftübertragungsvorrichtungen gemeinsam geschaltet werden. Damit kann der Schaltaufwand erheblich verringert werden, da eine Umschaltung zwischen den Nockenprofilen in jeder beliebigen Nockenwinkelposition erfolgen kann (nockenwinkelunabhängige Schaltung).

Erfindungsgemäß ist die erste Hebelvorrichtung als Kipphebel ausgebildet und/oder die zweite Hebelvorrichtung ist als Kipphebel ausgebildet.

In einer Ausführungsvariante ist die zweite Hebelvorrichtung starr mit der ersten Hebelvorrichtung verbunden. Alternativ oder zusätzlich stützt sich die zweite Hebelvorrichtung über eine Spieleinstelleinrichtung, insbesondere eine Einstellschraube, an der ersten Hebelvorrichtung ab. Über die Spieleinstelleneinrichtung kann einmalig ein Spiel zwischen der ersten Hebelvorrichtung und der zweiten Hebelvorrichtung eingestellt werden, um beispielsweise Fertigungs- und Montagetoleranzen auszugleichen. Da keine Relativbewegung zwischen der ersten Hebelvorrichtung und der zweiten Hebelvorrichtung während des Betriebs stattfindet, muss das Spiel nur einmalig vor einer Erstinbetriebnahme der Brennkraftmaschine eingestellt werden.

In einer Weiterbildung kann sich die zweite Hebelvorrichtung, insbesondere die Einstellschraube, beispielsweise an einem Vorsprung abstützen, der sich von einem Hauptkörperbereich der ersten Hebelvorrichtung erstreckt. Insbesondere kann sich der Vorsprung ausgehend von dem Hauptkörperbereich der ersten Hebelvorrichtung in einer Richtung parallel zur Nockenwelle und/oder Hebelachse der ersten Hebelvorrichtung und der zweiten Hebelvorrichtung erstrecken.

In einer weiteren Ausführungsvariante weist die erste Hebelvorrichtung eine Verdrehsicherung auf, die eine Drehung des ersten Nockenfolgers um eine Verschiebeachse des ersten Nockenfolgers verhindert. Alternativ oder zusätzlich weist die zweite Hebelvorrichtung eine Verdrehsicherung auf, die eine Drehung des zweiten Nockenfolgers um eine Verschiebeachse des zweiten Nockenfolgers verhindert. Die Verdrehsicherungen gewährleisten, dass eine Ausrichtung des ersten Nockenfolgers und des zweiten Nockenfolgers bezüglich des ersten Nockens und des zweiten Nockens im Betrieb gehalten wird.

Beispielsweise können die Verdrehsicherungen in Längsöffnungen oder Längsnuten von Stellkolben eingreifen, in denen die Nockenfolger gelagert sind.

Insbesondere kann die erste Verdrehsicherung, vorzugsweise in Verbindung mit der entsprechenden Längsnut, einen Axialanschlag für einen ersten Stellkolben bilden. Alternativ oder zusätzlich kann die zweite Verdrehsicherung, vorzugsweise in Verbindung mit der entsprechenden Längsnut, einen Axialanschlag für einen zweiten Stellkolben bilden.

In einer nicht beanspruchten Ausführungsform weist die erste Hebelvorrichtung mindestens einen hydraulisch beaufschlagbaren, verschiebbaren Sperrkolben auf, der zum Arretieren des ersten Nockenfolgers ausgebildet ist.

Vorzugsweise kann der mindestens eine Sperrkolben in einer Radialrichtung bezüglich einer Längsachse der Aufnahme verschiebbar sein.

Es ist möglich, dass der mindestens eine Sperrkolben in eine Umfangsnut der ersten Aufnahme zum Arretieren des ersten Nockenfolgers eingreifen kann.

Beispielsweise kann mindestens ein Steuerfluidzufuhrkanal zum Zuführen von Steuerfluid in die Umfangsnut münden, sodass der mindestens eine Sperrkolben außer Eingriff mit der Umfangsnut bringbar ist. Damit kann eine Verschiebebewegung des ersten Nockenfolgers freigegeben werden.

Bevorzugt kann der Sperrkolben verschiebbar in einem ersten Stellkolben gelagert sein, der auch den ersten Nockenfolger lagern kann.

Insbesondere kann nur bei im Wesentlichen kraftfreier Wirkverbindung von der Nockenwelle über die Kraftübertragungsvorrichtung zu dem Gaswechselventil, eine Bewegung des mindestens einen Sperrkolbens freigegeben sein. Damit ist auf einfache Weise sichergestellt, dass nur im Grundkreisbereich zwischen der ersten Hebelvorrichtung und der zweiten Hebelvorrichtung umgeschaltet wird und damit eine einfache, nicht zylinderselektive Umschaltung ermöglicht wird.

In einem nicht beanspruchten Ausführungsbeispiel ist der mindestens eine Sperrkolben, insbesondere zum Arretieren des ersten Nockenfolgers, elastisch vorgespannt. Damit kann einerseits eine Rückstellung des mindestens einen Sperrkolbens in eine Ausgangsposition sichergestellt werden. Andererseits ermöglicht dies auch eine Fail-Safe-Funktionalität, wonach bei Ausfall der Steuerfluidversorgung der erste Nockenfolger in eine betriebssichere, definierte Stellung gebracht wird.

In einem weiteren nicht beanspruchten Ausführungsbeispiel ist eine Verdrehsicherung für den mindestens einen Sperrkolben vorgesehen, die eine Drehung des mindestens einen Sperrkolbens um eine Verschiebeachse des Sperrkolbens verhindert.

In einer nicht beanspruchten Ausführungsvariante weist die zweite Hebelvorrichtung einen hydraulisch beaufschlagbaren Druckraum auf, der zum Arretieren des zweiten Nockenfolgers ausgebildet ist. Bei hydraulischer Beaufschlagung kann der Druckraum beispielsweise als ein Druckpolster dienen, das eine Verschiebung des zweiten Nockenfolgers in der zweiten Aufnahme verhindert. Bei fehlender hydraulischer Beaufschlagung kann sich der zweite Nockenfolger beispielsweise in der zweiten Aufnahme hin- und herbewegen.

Vorzugsweise bildet ein Bereich, insbesondere ein Bodenbereich, der zweiten Aufnahme den Druckraum. Der Druckraum kann bspw. zwischen einer Bodenfläche der zweiten Aufnahme und einer Stirnfläche eines Stellkolbens, der den zweiten Nockenfolger lagert, definiert sein.

In einer weiteren nicht beanspruchten Ausführungsvariante sind der mindestens eine Sperrkolben und der Druckraum gemeinsam hydraulisch beaufschlagbar. Dies verringert den Steuerungsaufwand und kann zugleich sicherstellen, dass stets eine Wirkverbindung zu dem mindestens einen Gaswechselventil besteht.

In einer nicht beanspruchten Ausführungsform erfolgt eine Steuerfluidversorgung zum hydraulischen Arretieren und Freigeben des ersten Nockenfolgers und des zweiten Nockenfolgers über eine gemeinsame Hebelachse, insbesondere Kipphebelachse, der ersten Hebelvorrichtung und der zweiten Hebelvorrichtung, vorzugsweise über einen Hebelachsenlängskanal der Hebelachse.

In einer weiteren nicht beanspruchten Ausführungsform gibt der mindestens eine Sperrkolben eine Verschiebebewegung des ersten Nockenfolgers bei hydraulischer Beaufschlagung des Sperrkolbens frei. Alternativ oder zusätzlich arretiert der mindestens eine Sperrkolben den ersten Nockenfolger bei fehlender hydraulischer Beaufschlagung des Sperrkolbens.

In einer weiteren nicht beanspruchten Ausführungsvariante arretiert der Druckraum den zweiten Nockenfolger bei hydraulischer Beaufschlagung des Druckraums. Alternativ oder zusätzlich gibt der Druckraum eine Verschiebebewegung des zweiten Nockenfolgers bei fehlender hydraulischer Beaufschlagung des Druckraums frei.

In einem Ausführungsbeispiel ist der erste Nockenfolger in einem ersten Stellkolben gelagert, der axial verschiebbar in der ersten Aufnahme gelagert. Alternativ oder zusätzlich ist der zweite Nockenfolger in einem zweiten Stellkolben gelagert, der axial verschiebbar in der zweiten Aufnahme gelagert ist.

In einem weiteren Ausführungsbeispiel weist die Kraftübertragungsvorrichtung ferner eine Steuerfluidversorgung zum hydraulischen Entsperren des ersten Nockenfolgers und zum hydraulischen Arretieren des zweiten Nockenfolgers und eine separat dazu vorgesehene Schmierfluidversorgung zum Schmieren einer Drehbewegung des ersten Nockenfolgers und des zweiten Nockenfolgers auf.

Vorzugsweise können die erste Hebelvorrichtung und die zweite Hebelvorrichtung schwenkbar um eine gemeinsame Hebelachse, insbesondere Kipphebelachse, gelagert sein.

Erfindungsgemäß ist der Nockenfolger der ersten Hebelvorrichtung und/oder der Nockenfolger der zweiten Hebelvorrichtung als eine drehbare Rolle ausgebildet .

Bevorzugt kann die Nockenkontur des ersten Nockens verschieden zu der Nockenkontur des zweiten Nockens sein.

Es ist möglich, dass der erste Nockenfolger und/oder der zweite Nockenfolger in einer Richtung zu der Nockenwelle elastisch vorgespannt sein können.

Es ist auch möglich, dass die erste Hebelvorrichtung und/oder die zweite Hebelvorrichtung in einer Richtung zu der Nockenwelle beispielsweise mittels einer Drehfeder elastisch vorgespannt sein können.

Gemäß einem weiteren Gesichtspunkt betrifft die vorliegende Erfindung auch einen variablen Ventiltrieb für eine Brennkraftmaschine. Der variable Ventiltrieb weist eine Nockenwelle mit einem ersten Nocken und einem zweiten Nocken, der in einer Längsrichtung der Nockenwelle versetzt zu dem ersten Nocken angeordnet ist, auf. Der variable Ventiltrieb weist mindestens ein Gaswechselventil und eine Kraftübertragungsvorrichtung wie hierin offenbart auf. Die Erfindung betrifft auch ein Kraftfahrzeug, insbesondere ein Nutzfahrzeug (zum Beispiel ein Lastkraftwagen oder ein Omnibus), mit einem variablen Ventiltrieb wie hierin offenbart oder einer Kraftübertragungsvorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines variablen Ventiltriebs mit einer beispielhaften Kraftübertragungsvorrichtung;
- Figur 2: eine Schnittansicht durch den variablen Ventiltrieb mit einer Schnittebene parallel zur Längsachse der Nockenwelle;
- Figur 3: eine Schnittansicht durch eine erste Hebelvorrichtung des variablen Ventiltriebs mit einer Schnittebene senkrecht zur Längsachse der Nockenwelle;
- Figur 4: eine Schnittansicht durch eine zweite Hebelvorrichtung des variablen Ventiltriebs mit einer Schnittebene senkrecht zur Längsachse der Nockenwelle;
- Figur 5: eine Schnittansicht durch die erste Hebelvorrichtung des variablen Ventiltriebs mit einer Schnittebene parallel zur Längsachse der Nockenwelle und senkrecht zur Schnittebene von Figur 3; und
- Figur 6: unterschiedliche beispielhafte Ventilhubverläufe, die mit der hierin offenbarten Kraftübertragungsvorrichtung erzielbar sind.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

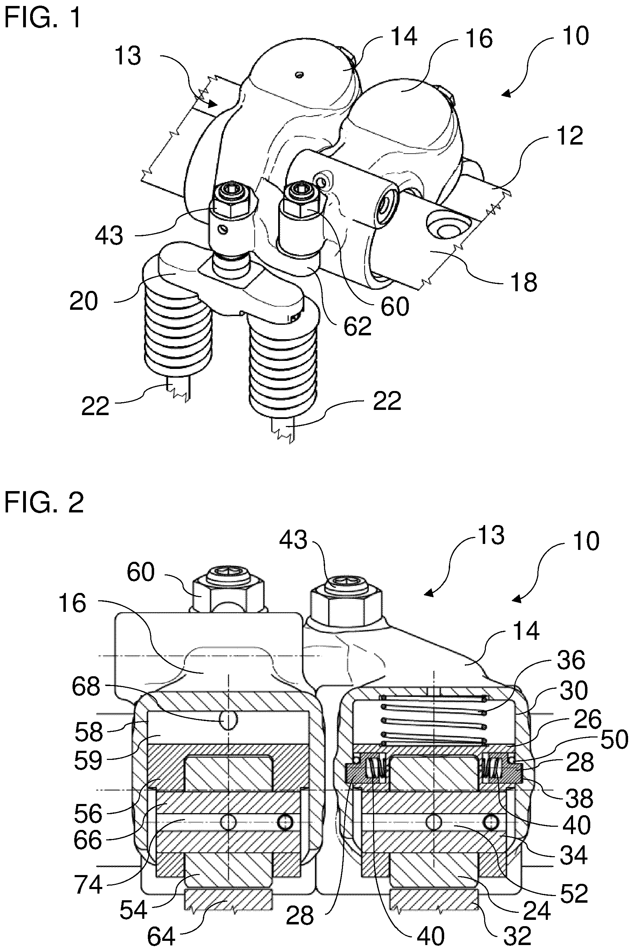

In Figur 1 ist ein variabler Ventiltrieb 10 dargestellt. Der variable Ventiltrieb 10 weist eine Nockenwelle 12 und eine Kraftübertragungsvorrichtung 13 mit einem ersten Kipphebel 14, einem zweiten Kipphebel 16 und einer Kipphebelachse 18 auf. Der variable Ventiltrieb 10 weist zudem eine Ventilbrücke 20 und zwei Gaswechselventile 22 auf.

Der erste Kipphebel 14 und der zweite Kipphebel 16 sind schwenkbar um die Kipphebelachse 18 gelagert. Die Gaswechselventile 22 können mittels der Ventilbrücke 20 wahlweise über den ersten Kipphebel 14 oder den zweiten Kipphebel 16 betätigt werden, wie später im Detail beschrieben ist. Die Gaswechselventile 22 können als Einlassventile oder als Auslassventile ausgebildet sein.

Es ist auch möglich, dass keine Ventilbrücke vorgesehen ist, und beispielsweise nur ein oder zwei Gaswechselventile direkt wahlweise von dem ersten Kipphebel 14 oder dem zweiten Kipphebel 16 betätigt werden.

In anderen nicht erfindungsgemäßen Ausführungsformen können anstelle der Kipphebel 14, 16 andere Hebelvorrichtungen, zum Beispiel Schlepphebel, zum Betätigen mindestens eines Gaswechselventils verwendet werden. Dann sind die Hebelvorrichtungen dazu ausgebildet, dass wahlweise eine erste Hebelvorrichtung oder eine zweite Hebelvorrichtung das mindestens eine Gaswechselventil betätigt.

Unter Bezugnahme auf die Figuren 1 bis 5 ist nachfolgend die Konfiguration des variablen Ventiltriebs 10 und insbesondere der Kraftübertragungsvorrichtung 13 beschrieben.

Der erste Kipphebel 14 weist einen ersten Nockenfolger 24, einen ersten Stellkolben 26, zwei Sperrkolben 28 und eine erste Stellkolbenaufnahme 30 auf.

Der erste Nockenfolger 24 folgt einer Nockenkontur eines ersten Nockens 32 der Nockenwelle 12. Der erste Nockenfolger 24 ist als eine drehbar gelagerte Rolle ausgebildet. Der erste Nockenfolger 24 ist um eine erste Nockenfolgerachse 34 drehbar. Die erste Nockenfolgerachse 34 ist in dem ersten Stellkolben 26 gelagert.

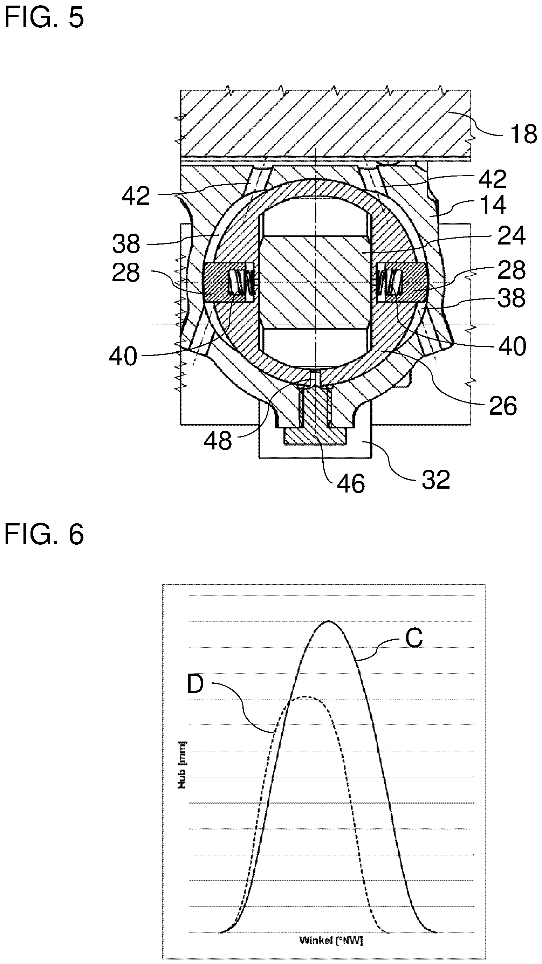

Der erste Stellkolben 26 ist verschiebbar in der ersten Stellkolbenaufnahme 30 gelagert. Ein elastisches Element 36, zum Beispiel eine Rückstellfeder, stellt den ersten Stellkolben 26 und damit den ersten Nockenfolger 24 in einer Richtung zu dem ersten Nocken 32 zurück. Eine Verschiebung des ersten Stellkolbens 26 kann von dem Sperrkolben 28 gesperrt werden, wie in Figur 2 und Figur 5 dargestellt ist. Damit kann der erste Stellkolben 26 in der ersten Stellkolbenaufnahme 30 arretiert werden.

Die Sperrkolben 28 sind verschiebbar im ersten Stellkolben 26 gelagert. Die Sperrkolben 28 sind in einer Richtung senkrecht zu einer Verschiebeachse des ersten Stellkolbens 26 verschiebbar. Die Sperrkolben 28 können in eine Umfangsnut 38 der ersten Stellkolbenaufnahme 30 eingreifen. Greifen die Sperrkolben 28 in die Umfangsnut 38 ein, wird eine Verschiebung des ersten Stellkolbens 26 innerhalb der ersten Stellkolbenaufnahme 30 gesperrt. Die Sperrkolben 28 sind über elastische Elemente 40, zum Beispiel Rückstellfedern, in einer Sperrposition vorgespannt, in der die Sperrkolben 28 in die Umfangsnut 38 eingreifen. Um eine Verschiebung des ersten Stellkolbens 26 zu ermöglichen, kann über einen oder mehrere Steuerfluidversorgungskanäle 42 ein Steuerfluid zur Umfangsnut 38 geleitet werden. Das zugeführte Steuerfluid bewirkt, dass sich die Sperrkolben 28 in einer Richtung zueinander bewegen. Die Sperrkolben 28 gelangen außer Eingriff mit der Umfangsnut 38. Eine Verschiebebewegung des ersten Stellkolbens 26 wird freigegeben.

Wenn eine Verschiebung des ersten Stellkolbens 26 gesperrt ist, wird eine Nockenkontur des ersten Nockens 32 über den ersten Nockenfolger 24 auf die Gaswechselventile 22 übertragen. Dabei kippt der erste Kipphebel 14 um die Kipphebelachse 18 und betätigt über eine erste Einstellschraube 43 die Ventilbrücke 20 zum Öffnen der Gaswechselventile 22. Über die erste Einstellschraube 43 kann ein Ventilspiel eingestellt und nachgestellt werden.

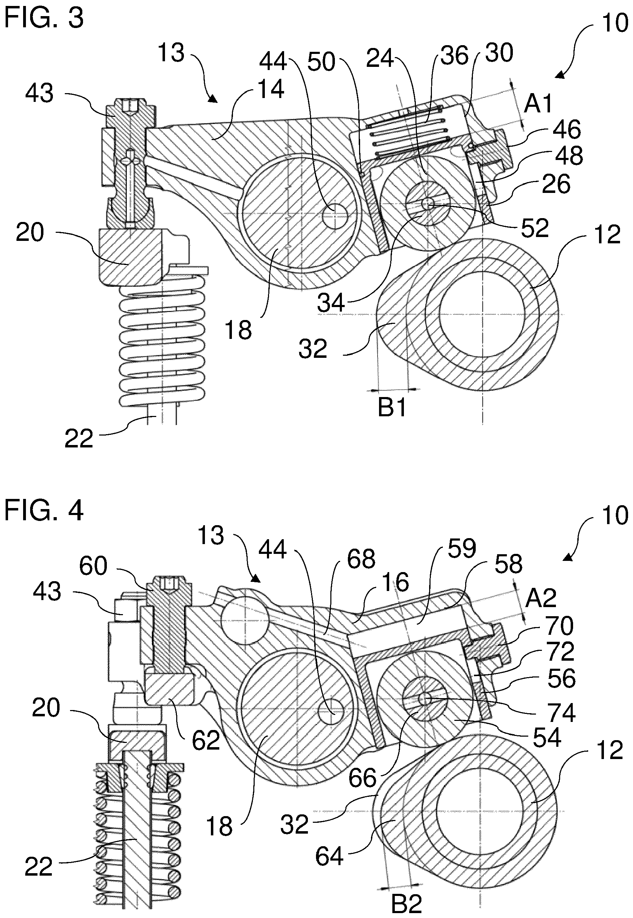

Wenn eine Verschiebung des ersten Stellkolbens 26 freigegeben ist, wird eine Nockenkontur des ersten Nockens 32 über eine Verschiebung des ersten Nockenfolgers 24 innerhalb der ersten Stellkolbenaufnahme 30 kompensiert. Die Nockenkontur des ersten Nockens 32 wird nicht auf die Gaswechselventile 22 übertragen. Um eine Kompensation zu ermöglichen, kann ein Freigang A1 (siehe Figur 3) der ersten Stellkolbenaufnahme 30 größer als eine Maximalhöhe B1 (siehe Figur 3) des ersten Nockens 32 sein. Die Größe des Freigangs A1 kann bspw. von einer Anordnung der Nockenprofile der zwei Nocken 32, 64 zueinander abhängen.

Die Steuerfluidversorgungskanäle 42 werden über einen Hauptsteuerfluidkanal 44 mit Steuerfluid versorgt. Der Hauptsteuerfluidkanal 44 ist als ein Hebelachsenlängsbohrung ausgebildet. Somit können nicht nur die Kipphebel 14, 16 der Kraftübertragungsvorrichtung 13 mit Steuerfluid versorgt werden. Zusätzlich können weitere Kipphebel weiterer ähnlich oder identisch aufgebauter Kraftübertragungsvorrichtungen (nicht dargestellt) mit Steuerfluid von dem Hauptsteuerfluidkanal 44 versorgt werden. Dies ermöglicht eine gleichzeitige und gemeinsame Schaltung von mehreren Kraftübertragungsvorrichtungen, sodass nicht zylinderselektiv geschaltet werden muss. Dies kann den Steuerungsaufwand erheblich verringern.

Um eine Drehung des ersten Stellkolbens 26 um eine Verschiebeachse des ersten Stellkolbens 26 zu verhindern, ist eine erste Verdrehsicherung 46 vorgesehen. Die Verschiebeachse des ersten Stellkolbens 26 stimmt mit einer Längsachse der ersten Stellkolbenaufnahme 30 überein. Die erste Verdrehsicherung 46 greift in eine Längsnut 48 des ersten Stellkolbens 26 ein. Die Längsnut 48 verläuft parallel zur Längsachse der ersten Stellkolbenaufnahme 30. Damit ermöglicht die erste Verdrehsicherung 46 lediglich eine Bewegung des ersten Stellkolbens 26 entlang der Längsachse der ersten Stellkolbenaufnahme 30. Damit kann sichergestellt werden, dass der erste Nockenfolger 24 in der richtigen Ausrichtung bezüglich der Nockenwelle 12 verbleibt. Weiterhin bildet die Verdrehsicherung 46 in Verbindung mit der Längsnut 48 einen Axialanschlag für den ersten Stellkolben 26. Die erste Verdrehsicherung 46 kann beispielsweise stift- oder schraubenförmig mit sich verjüngendem Vorderende ausgebildet sein.

Um eine Drehung der Sperrkolben 28 um eine Verschiebeachse der Sperrkolben 28 zu verhindern, ist eine zweite Verdrehsicherung 50 vorgesehen. Die zweite Verdrehsicherung 50 ist ringförmig und in einer Umfangsnut des ersten Stellkolbens 26 angeordnet.

Zum Schmieren einer Drehung des ersten Nockenfolgers 24 weist die erste Nockenfolgerachse 34 einen ersten Schmierfluidlängskanal 52 auf. Über einen Radialkanal kann Schmierfluid von dem ersten Schmierfluidlängskanal 52 zwischen die Kontaktflächen des ersten Nockenfolgers 24 und der ersten Nockenfolgerachse 34 geleitet werden. Der Schmierfluidlängskanal ist mit einer Schmierfluidversorgung verbunden. Die Schmierfluidversorgung ist separat von der Steuerfluidversorgung zum Zuführen von Steuerfluid zu dem Hauptsteuerfluidkanal 44 vorgesehen.

Der zweite Kipphebel 16 weist einen zweiten Nockenfolger 54, einen zweiten Stellkolben 56 und eine zweite Stellkolbenaufnahme 58 auf.

Der zweite Kipphebel 16 ist über eine zweite Einstellschraube 60 starr mit dem ersten Kipphebel 14 verbunden. Im Einzelnen sitzt die zweite Einstellschraube 60 auf einem Vorsprung (einer Lasche) 62 des ersten Kipphebels 14 auf. Der Vorsprung 62 erstreckt sich ausgehend von einem Hauptkörperbereich des ersten Kipphebels 14 in einer Richtung parallel zur Kipphebelachse 18. Mit der zweiten Einstellschraube 60 kann ein Spiel, welches aufgrund von Fertigungstoleranzen zwischen dem ersten Kipphebel 14 und dem zweiten Kipphebel 16 entstehen kann, eingestellt werden.

Der zweite Nockenfolger 54 folgt einer Nockenkontur eines zweiten Nockens 64 der Nockenwelle 12. Der zweite Nockenfolger 54 ist als eine drehbar gelagerte Rolle ausgebildet. Der zweite Nockenfolger 54 ist um eine zweite Nockenfolgerachse 66 drehbar. Die zweite Nockenfolgerachse 66 ist in dem zweiten Stellkolben 56 gelagert.

Der zweite Stellkolben 56 ist verschiebbar in der zweiten Stellkolbenaufnahme 58 gelagert. In einem Bereich (Druckraum) 59 der zweiten Stellkolbenaufnahme 58, der sich zwischen einer Bodenfläche der zweiten Stellkolbenaufnahme 58 und dem zweiten Stellkolben 56 erstreckt, kann Steuerfluid zugeführt werden. Das Steuerfluid kann über einen Steuerfluidversorgungskanal 68 zugeführt werden. Der Steuerfluidversorgungskanal 68 steht in Fluidverbindung mit dem Hauptsteuerfluidkanal 44. Wird der Druckraum mit Steuerfluid beaufschlagt, wird eine Verschiebung des zweiten Stellkolbens 56 in der zweiten Stellkolbenaufnahme 58 gesperrt. D. h., der zweite Stellkolben 56 ist in der zweiten Stellkolbenaufnahme 58 arretiert. Wird der Druckraum nicht mit Steuerfluid beaufschlagt, wird eine Verschiebung des zweiten Stellkolbens 56 in der zweiten Stellkolbenaufnahme 58 freigegeben.

Wenn eine Verschiebung des zweiten Stellkolbens 56 freigegeben ist, wird eine Nockenkontur des zweiten Nockens 64 über eine Verschiebung des zweiten Nockenfolgers 54 innerhalb der zweiten Stellkolbenaufnahme 58 kompensiert. Die Nockenkontur des zweiten Nockens 64 wird nicht auf die Gaswechselventile 22 übertragen. Um eine Kompensation zu ermöglichen, kann ein Freigang A2 (siehe Figur 4) der zweiten Stellkolbenaufnahme 58 größer als eine Maximalhöhe B2 (siehe Figur 4) des zweiten Nockens 64 sein.

Wenn eine Verschiebung des zweiten Stellkolbens 56 gesperrt ist, wird eine Nockenkontur des zweiten Nockens 64 über den zweiten Nockenfolger 54 auf die Gaswechselventile 22 übertragen. Dabei kippt der zweite Kipphebel 16 um die Kipphebelachse 18 und überträgt die Kippbewegung über die zweite Einstellschraube 60 auf den ersten Kipphebel 14. Der erste Kipphebel 14 betätigt die Ventilbrücke 20 zum Öffnen der Gaswechselventile 22.

Wie der erste Kipphebel 14, weist der zweite Kipphebel 16 eine Verdrehsicherung 70 auf. Die Verdrehsicherung 70 greift in eine Längsnut 72 des zweiten Stellkolbens 56 ein, um eine Drehung des zweiten Stellkolbens 56 um eine Längsachse der zweiten Stellkolbenaufnahme 58 zu verhindern. Die Verdrehsicherung 70 und die Längsnut 72 können wie die erste Verdrehsicherung 46 und die Längsnut 48 ausgebildet sein. Insbesondere bildet die Verdrehsicherung 70 in Verbindung mit der Längsnut 72 einen Axialanschlag für den zweiten Stellkolben 56.

Zum Schmieren einer Drehung des zweiten Nockenfolgers 54 weist die zweite Nockenfolgerachse 66 einen Schmierfluidlängskanal 74 auf, der wie der erste Schmierfluidlängskanal 52 der ersten Nockenfolgerachse 34 ausgebildet ist.

Die Sperrkolben 28 und der Druckraum 59 können beide gemeinsam mit Steuerfluid aus dem Hauptsteuerfluidkanal 44 beaufschlagt werden. Damit kann die Kraftübertragungsvorrichtung 13 wahlweise eine Nockenkontur des ersten Nockens 32 oder eine Nockenkontur des zweiten Nockens 64 auf die Gaswechselventile 22 übertragen.

Wird Steuerfluid über den Hauptsteuerfluidkanal 44 zugeführt, wird eine Verschiebung des ersten Stellkolbens 26 freigegeben und eine Verschiebung des zweiten Stellkolbens 56 gesperrt. Die Verschiebung des ersten Stellkolbens 26 innerhalb der ersten Stellkolbenaufnahme 30 kompensiert die Nockenkontur des ersten Nockens 32. Die Sperrung des zweiten Stellkolbens 56 führt zu einer Übertragung der Nockenkontur des zweiten Nockens 64 auf die Gaswechselventile 22.

Wird kein Steuerfluid über den Hauptsteuerfluidkanal 44 zugeführt, wird eine Verschiebung des ersten Stellkolbens 26 gesperrt und eine Verschiebung des zweiten Stellkolbens 56 freigegeben. Die Verschiebung des zweiten Stellkolbens 56 innerhalb der zweiten Stellkolbenaufnahme 58 kompensiert die Nockenkontur des zweiten Nockens 64. Die Sperrung des ersten Stellkolbens 26 führt zu einer Übertragung der Nockenkontur des ersten Nockens 32 auf die Gaswechselventile 22.

Der erste Nocken 32 und der zweiten Nocken 34 können vollkommen unabhängig voneinander gestaltet sein. Damit stehen zur Steuerung der Gaswechselventile 22 zwei unabhängige Ventilhubkurven als Alternativen zur Verfügung.

Zum Beispiel kann, wie in Figur 6 dargestellt ist, der erste Nocken 32 ein Normalhub-Nocken sein, der eine Ventilhubkurve C der Gaswechselventile 22 bewirkt. Hierbei werden die als Einlassventile ausgebildeten Gaswechselventile 22 gemäß einem Otto- oder Diesel-Kreisprozess im Einlasstakt geöffnet. Der zweite Nocken 64 kann als ein Miller-Nocken ausgebildet sein, der die Ventilhubkurve D der Gaswechselventile 22 bewirkt. Hierbei werden die als Einlassventile ausgebildeten Gaswechselventile 22 früher geschlossen als bei der Ventilhubkurve C. Selbstverständlich können die Nocken 32, 64 auch zur Erzeugung anderer Ventilhubkurven verwendet werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen, welcher von den angehängten Ansprüchen definiert wird. Insbesondere beansprucht die Erfindung auch Schutz für den Gegenstand und die Merkmale der Unteransprüche .

### Bezugszeichenliste

- 10: Variabler Ventiltrieb
- 12: Nockenwelle
- 13: Kraftübertragungsvorrichtung
- 14: Erster Kipphebel (erste Hebelvorrichtung)
- 16: Zweiter Kipphebel (zweite Hebelvorrichtung)
- 18: Kipphebelachse (Hebelachse)
- 20: Ventilbrücke
- 22: Gaswechselventil
- 24: Erster Nockenfolger
- 26: Erster Stellkolben
- 28: Sperrkolben
- 30: Erste Stellkolbenaufnahme
- 32: Erster Nocken
- 34: Erste Nockenfolgerachse
- 36: Elastisches Element
- 38: Umfangsnut
- 40: Elastisches Element
- 42: Steuerfluidversorgungskanal
- 43: Erste Einstellschraube
- 44: Hauptsteuerfluidkanal
- 46: Erste Verdrehsicherung
- 48: Längsnut
- 50: Zweite Verdrehsicherung
- 52: Erster Schmierfluidlängskanal
- 54: Zweiter Nockenfolger
- 56: Zweiter Stellkolben
- 58: Zweite Stellkolbenaufnahme
- 59: Druckraum
- 60: Zweite Einstellschraube
- 62: Vorsprung
- 64: Zweiter Nocken
- 66: Zweite Nockenfolgerachse
- 68: Steuerfluidversorgungskanal
- 70: Verdrehsicherung
- 72: Längsnut
- 74: Schmierfluidlängskanal

- A1: Freigang
- A2: Freigang
- B1: Maximalhöhe
- B2: Maximalhöhe
- C: Ventilsteuerkurve
- D: Ventilsteuerkurve

## Patentansprüche

1. Kraftübertragungsvorrichtung (13) für einen variablen Ventiltrieb (10) einer Brennkraftmaschine mit mindestens einem Gaswechselventil (22) und einer Nockenwelle (12) aufweisend einen ersten Nocken (32) und einen zweiten Nocken (64), wobei die Kraftübertragungsvorrichtung (13) aufweist:
eine erste Hebelvorrichtung (14), über die eine Wirkverbindung zwischen dem ersten Nocken (32) und dem mindestens einen Gaswechselventil (22) herstellbar ist, wobei die erste Hebelvorrichtung (14) einen den ersten Nocken (32) kontaktierenden ersten Nockenfolger (24), der als eine drehbare Rolle ausgebildet ist, und eine erste Aufnahme (30) für den ersten Nockenfolger (24) aufweist und der erste Nockenfolger (24) in der ersten Aufnahme (30) aufgenommen, verschiebbar und arretierbar ist; und
eine zweite Hebelvorrichtung (16), über die eine Wirkverbindung zwischen dem zweiten Nocken (64) und dem mindestens einen Gaswechselventil (22) herstellbar ist, wobei die zweite Hebelvorrichtung (16) einen den zweiten Nocken (64) kontaktierenden zweiten Nockenfolger (54), der als eine drehbare Rolle ausgebildet ist, und eine zweite Aufnahme (58) für den zweiten Nockenfolger (54) aufweist und der zweite Nockenfolger (54) in der zweiten Aufnahme (58) aufgenommen, verschiebbar und arretierbar ist,
wobei die erste Hebelvorrichtung (14) als Kipphebel ausgebildet ist und/oder die zweite Hebelvorrichtung (16) als Kipphebel ausgebildet ist.

2. Kraftübertragungsvorrichtung (13) nach Anspruch 1, wobei:
der erste Nockenfolger (24) zum Kompensieren einer Nockenkontur des ersten Nockens (32) verschiebbar in der ersten Aufnahme (30) gelagert ist und der erste Nockenfolger (24) zum Übertragen der Nockenkontur des ersten Nockens (32) auf das mindestens eine Gaswechselventil (22) in der ersten Aufnahme (30) arretierbar ist; und/oder
der zweite Nockenfolger (54) zum Kompensieren einer Nockenkontur des zweiten Nockens (64) verschiebbar in der zweiten Aufnahme (58) gelagert ist und der zweite Nockenfolger (54) zum Übertragen der Nockenkontur des zweiten Nockens (64) auf das mindestens eine Gaswechselventil (22) in der zweiten Aufnahme (58) arretierbar ist.

3. Kraftübertragungsvorrichtung (13) nach Anspruch 1 oder Anspruch 2, wobei:
wahlweise der erste Nockenfolger (24) oder der zweite Nockenfolger (54) arretiert wird; und/oder
der erste Nockenfolger (24) und/oder der zweite Nockenfolger (54) hydraulisch arretierbar ist.

4. Kraftübertragungsvorrichtung (13) nach einem der vorherigen Ansprüche, , wobei:
die erste Hebelvorrichtung (14) und die zweite Hebelvorrichtung (16) schwenkbar um eine gemeinsame Kipphebelachse (18) gelagert sind; und/oder
das mindestens eine Gaswechselventil (22) mittels einer Ventilbrücke (20) wahlweise über die erste Hebelvorrichtung (14) oder die zweite Hebelvorrichtung (16) betätigbar ist oder das mindestens eine Gaswechselventil (22) direkt wahlweise von der ersten Hebelvorrichtung (14) oder der zweiten Hebelvorrichtung (16) betätigbar ist.

5. Kraftübertragungsvorrichtung (13) nach einem dem vorherigen Ansprüche, wobei:
die zweite Hebelvorrichtung (16) starr mit der ersten Hebelvorrichtung (14) verbunden ist; oder
die zweite Hebelvorrichtung (16) sich über eine Spieleinstelleinrichtung (60), insbesondere eine Einstellschraube, an der ersten Hebelvorrichtung (14) abstützt.

6. Kraftübertragungsvorrichtung (13) nach einem der vorherigen Ansprüche, wobei:
die erste Hebelvorrichtung (14) eine Verdrehsicherung (46) aufweist, die eine Drehung des ersten Nockenfolgers (24) um eine Verschiebeachse des ersten Nockenfolgers (24) verhindert; und/oder
die zweite Hebelvorrichtung (16) eine Verdrehsicherung (70) aufweist, die eine Drehung des zweiten Nockenfolgers (54) um eine Verschiebeachse des zweiten Nockenfolgers (54) verhindert.

7. Kraftübertragungsvorrichtung (13) nach einem der vorherigen Ansprüche, wobei:
der erste Nockenfolger (24) in einem ersten Stellkolben (26) gelagert ist, der axial verschiebbar in der ersten Aufnahme (30) gelagert ist; und/oder
der zweite Nockenfolger (54) in einem zweiten Stellkolben (56) gelagert ist, der axial verschiebbar in der zweiten Aufnahme (58) gelagert ist.

8. Kraftübertragungsvorrichtung (13) nach einem der vorherigen Ansprüche, ferner aufweisend eine Steuerfluidversorgung zum hydraulischen Entsperren des ersten Nockenfolgers (24) und zum hydraulischen Arretieren des zweiten Nockenfolgers (54) und eine separat dazu vorgesehene Schmierfluidversorgung zum Schmieren einer Drehbewegung des ersten Nockenfolgers (24) und des zweiten Nockenfolgers (54).

9. Variabler Ventiltrieb (10) für eine Brennkraftmaschine, aufweisend:
eine Nockenwelle (12) mit einem ersten Nocken (32) und einem zweiten Nocken (64), der in einer Längsrichtung der Nockenwelle (12) versetzt zu dem ersten Nocken (32) angeordnet ist;
mindestens ein Gaswechselventil (22); und
eine Kraftübertragungsvorrichtung (13) nach einem der vorherigen Ansprüche.

10. Kraftfahrzeug, insbesondere Nutzfahrzeug, mit einem variablen Ventiltrieb (10) nach Anspruch 9 oder einer Kraftübertragungsvorrichtung (13) nach einem der Ansprüche 1 bis 8.

## Claims

1. A force transmission device (13) for a variable valve train (10) of an internal combustion engine with at least one gas exchange valve (22) and with a camshaft (12) having a first cam (32) and a second cam (64), wherein the force transmission device (13) has:
a first lever device (14), by means of which an operative connection can be produced between the first cam (32) and the at least one gas exchange valve (22), wherein the first lever device (14) has a first cam follower (24), which makes contact with the first cam (32) and which is formed as a rotatable roller, and a first receptacle (30) for the first cam follower (24), and the first cam follower (24) is received, displaceable and lockable in the first receptacle (30); and
a second lever device (16), by means of which an operative connection can be produced between the second cam (64) and the at least one gas exchange valve (22), wherein the second lever device (16) has a second cam follower (54), which makes contact with the second cam (64) and which is formed as a rotatable roller, and a second receptacle (58) for the second cam follower (54), and the second cam follower (54) is received, displaceable and lockable in the second receptacle (58),
wherein the first lever device (14) is formed as a rocker lever and/or the second lever device (16) is formed as a rocker lever.

2. The force transmission device (13) according to Claim 1, wherein:
the first cam follower (24) is mounted displaceably in the first receptacle (30) for the purposes of compensating a cam contour of the first cam (32), and the first cam follower (24) is lockable in the first receptacle (30) for the purposes of transmitting the cam contour of the first cam (32) to the at least one gas exchange valve (22); and/or
the second cam follower (54) is mounted displaceably in the second receptacle (58) for the purposes of compensating a cam contour of the second cam (64), and the second cam follower (54) is lockable in the second receptacle (58) for the purposes of transmitting the cam contour of the second cam (64) to the at least one gas exchange valve (22).

3. The force transmission device (13) according to Claim 1 or Claim 2, wherein:
selectively the first cam follower (24) or the second cam follower (54) is locked; and/or
the first cam follower (24) and/or the second cam follower (54) is hydraulically lockable.

4. The force transmission device (13) according to any of the preceding claims, wherein:
the first lever device (14) and the second lever device (16) are pivotable about a common rocker lever axis (18); and/or
the at least one gas exchange valve (22) can be actuated by means of a valve bridge (20) selectively via the first lever device (14) or the second lever device (16) or the at least one gas exchange valve (22) can be actuated directly selectively by the first lever device (14) or the second lever device (16).

5. The force transmission device (13) according to any of the preceding claims, wherein:
the second lever device (16) is rigidly connected to the first lever device (14); or
the second lever device (16) is supported on the first lever device (14) via a play setting device (60), in particular a setting screw.

6. The force transmission device (13) according to any of the preceding claims, wherein:
the first lever device (14) has a rotational securing means (46) which prevents a rotation of the first cam follower (24) about a displacement axis of the first cam follower (24); and/or
the second lever device (16) has a rotational securing means (70) which prevents a rotation of the second cam follower (54) about a displacement axis of the second cam follower (54).

7. The force transmission device (13) according to any of the preceding claims, wherein
the first cam follower (24) is mounted in a first actuating piston (26) which is mounted in axially displaceable fashion in the first receptacle (30); and/or
the second cam follower (54) is mounted in a second actuating piston (56) which is mounted in axially displaceable fashion in the second receptacle (58).

8. The force transmission device (13) according to any of the preceding claims, furthermore having a control fluid supply for the hydraulic unlocking of the first cam follower (24) and for the hydraulic locking of the second cam follower (54), and having a lubricating fluid supply, provided separately from said control fluid supply, for the lubrication of a rotational movement of the first cam follower (24) and of the second cam follower (54).

9. A variable valve train (10) for an internal combustion engine, having:
a camshaft (12) with a first cam (32) and with a second cam (64) which is arranged offset with respect to the first cam (32) in a longitudinal direction of the camshaft (12);
at least one gas exchange valve (22); and
a force transmission device (13) according to any of the preceding claims.

10. A motor vehicle, in particular utility vehicle, with a variable valve train (10) according to Claim 9 or with a force transmission device (13) according to any of Claims 1 to 8.

## Revendications

1. Dispositif de transfert de force (13) pour un mécanisme de commande de soupapes variable (10) d'un moteur à combustion interne muni d'au moins une soupape d'échange de gaz (22) et d'un arbre à cames (12) comprenant une première came (32) et une deuxième came (64), le dispositif de transfert de force (13) comprenant :
un premier dispositif de levier (14), par l'intermédiaire duquel une liaison fonctionnelle entre la première came (32) et l'au moins une soupape d'échange de gaz (22) peut être établie, le premier dispositif de levier (14) comprenant un premier suiveur de came (24) contactant la première came (32), qui est configuré sous la forme d'un rouleau rotatif, et un premier logement (30) pour le premier suiveur de came (24), et le premier suiveur de came (24) étant logé, déplaçable et assujettissable dans le premier logement (30) ; et
un deuxième dispositif de levier (16), par l'intermédiaire duquel une liaison fonctionnelle entre la deuxième came (64) et l'au moins une soupape d'échange de gaz (22) peut être établie, le deuxième dispositif de levier (16) comprenant un deuxième suiveur de came (54) contactant la deuxième came (64), qui est configuré sous la forme d'un rouleau rotatif, et un deuxième logement (58) pour le deuxième suiveur de came (54), et le deuxième suiveur de came (54) étant logé, déplaçable et assujettissable dans le deuxième logement (58),
dans lequel le premier dispositif de levier (14) est configuré sous la forme d'un levier basculant et/ou le deuxième dispositif de levier (16) est configuré sous la forme d'un levier basculant.

2. Dispositif de transfert de force (13) selon la revendication 1, dans lequel :
le premier suiveur de came (24) est monté de manière déplaçable dans le premier logement (30) pour la compensation d'un contour de came de la première came (32) et le premier suiveur de came (24) est assujettissable dans le premier logement (30) pour le transfert du contour de came de la première came (32) à l'au moins une soupape d'échange de gaz (22) ; et/ou
le deuxième suiveur de came (54) est monté de manière déplaçable dans le deuxième logement (58) pour la compensation d'un contour de came de la deuxième came (64) et le deuxième suiveur de came (54) est assujettissable dans le deuxième logement (58) pour le transfert du contour de came de la deuxième came (64) à l'au moins une soupape d'échange de gaz (22).

3. Dispositif de transfert de force (13) selon la revendication 1 ou la revendication 2, dans lequel :
au choix le premier suiveur de came (24) ou le deuxième suiveur de came (54) est assujetti ; et/ou
le premier suiveur de came (24) et/ou le deuxième suiveur de came (54) est assujettissable hydrauliquement.

4. Dispositif de transfert de force (13) selon l'une quelconque des revendications précédentes, dans lequel :
le premier dispositif de levier (14) et le deuxième dispositif de levier (16) sont montés de manière à pouvoir pivoter autour d'un axe de levier basculant commun (18) ; et/ou
l'au moins une soupape d'échange de gaz (22) peut être actionnée au choix par l'intermédiaire du premier dispositif de levier (14) ou du deuxième dispositif de levier (16) au moyen d'un pont de soupape (20), ou l'au moins une soupape d'échange de gaz (22) peut être actionnée directement au choix par le premier dispositif de levier (14) ou le deuxième dispositif de levier (16).

5. Dispositif de transfert de force (13) selon l'une quelconque des revendications précédentes, dans lequel :
le deuxième dispositif de levier (16) est relié de manière rigide avec le premier dispositif de levier (14) ; ou
le deuxième dispositif de levier (16) s'appuie sur le premier dispositif de levier (14) par l'intermédiaire d'un appareil d'ajustement de jeu (60), notamment d'une vis d'ajustement.

6. Dispositif de transfert de force (13) selon l'une quelconque des revendications précédentes, dans lequel :
le premier dispositif de levier (14) comprend un blocage en rotation (46), qui empêche une rotation du premier suiveur de came (24) autour d'un axe de déplacement du premier suiveur de came (24) ; et/ou
le deuxième dispositif de levier (16) comprend un blocage en rotation (70), qui empêche une rotation du deuxième suiveur de came (54) autour d'un axe de déplacement du deuxième suiveur de came (54).

7. Dispositif de transfert de force (13) selon l'une quelconque des revendications précédentes, dans lequel :
le premier suiveur de came (24) est monté dans un premier piston de réglage (26), qui est monté de manière déplaçable axialement dans le premier logement (30) ; et/ou
le deuxième suiveur de came (54) est monté dans un deuxième piston de réglage (56), qui est monté de manière déplaçable axialement dans le deuxième logement (58).

8. Dispositif de transfert de force (13) selon l'une quelconque des revendications précédentes, comprenant en outre une alimentation en fluide de contrôle pour le déverrouillage hydraulique du premier suiveur de came (24) et pour l'assujettissement hydraulique du deuxième suiveur de came (54) et une alimentation en fluide lubrifiant prévue séparément de celle-ci pour la lubrification d'un mouvement de rotation du premier suiveur de came (24) et du deuxième suiveur de came (54).

9. Mécanisme de commande de soupapes variable (10) pour un moteur à combustion interne, comprenant :
un arbre à cames (12) muni d'une première came (32) et d'une deuxième came (64), qui est agencée en décalage dans une direction longitudinale de l'arbre à cames (12) par rapport à la première came (32) ;
au moins une soupape à échange de gaz (22) ; et
un dispositif de transfert de force (13) selon l'une quelconque des revendications précédentes.

10. Véhicule automobile, notamment véhicule utilitaire, muni d'un mécanisme de commande de soupapes variable (10) selon la revendication 9 ou d'un dispositif de transfert de force (13) selon l'une quelconque des revendications 1 à 8.
